# EUROPÄISCHE PATENTSCHRIFT

(11) **EP 1 408 732 B1**
(45) Veröffentlichungstag und Bekanntmachung des Hinweises auf die Patenterteilung: **14.03.2007**
(21) Anmeldenummer: 02740765.9
(22) Anmeldetag: 06.07.2002
(51) Int. Cl.: A01F 12/40

(54) **VERTEILVORRICHTUNG FÜR AUS EINER ERNTEMASCHINE AUSTRETENDES HÄCKSELGUT**
DISTRIBUTING DEVICE FOR CHOPPED PRODUCTS DISCHARGED FROM A HARVESTER
DISPOSITIF DE DISTRIBUTION CON U POUR DES PRODUITS HACHES ISSUS D'UNE RECOLTEUSE

(30) Priorität: 13.07.2001 DE 10134141
(43) Veröffentlichungstag der Anmeldung: 21.04.2004
(73) Patentinhaber: DEERE & COMPANY, Moline, Illinois 61265-8098 (US)
(72) Erfinder: BUEERMANN, Martin, 89437 Haunsheim (DE)
(74) Vertreter: Holst, Sönke
(86) Internationale Anmeldenummer: PCT/EP2002/007551
(87) Internationale Veröffentlichungsnummer: WO 2003/005803

(56) Entgegenhaltungen:
- EP-A- 0 685 151
- EP-A- 0 970 595
- DE-A- 2 805 208
- DE-A- 19 921 996
- DE-C- 19 604 812
- FR-A- 2 760 172

## Beschreibung

Die Erfindung betrifft eine Verteilvorrichtung für aus einer Erntemaschine austretendes Häckselgut, mit einer Leiteinrichtung zum Vorgeben der Auswurfrichtung des Häckselguts, einem zum Verstellen der Auswurfrichtung der Leiteinrichtung eingerichteten Motor und einer Steuerungseinrichtung, die mit dem Motor sowie einer Seitenerkennungseinrichtung zur Erkennung der Lage eines abgeernteten und/oder noch nicht abgeernteten Teils eines Felds relativ zur Erntemaschine verbunden ist, deren Signale bei der Steuerung des Motors berücksichtigt werden.

Beim Einsatz von Anbaustrohhäckslern an Mähdreschern ist es wünschenswert, an der Rückseite des Mähdreschers die gehäckselten Gutreste auf Schneidwerksbreite zu verteilen. Auf jeden Fall ist dabei zu vermeiden, dass gehäckseltes Erntegut in den stehenden, noch nicht geernteten Bestand geworfen wird. Speziell bei Seitenwind ist der Fahrer gezwungen, bei jedem Fahrtrichtungswechsel, der eine unterschiedliche Windanströmung des Mähdreschers bedingt, die Leitbleche des Strohhäckslers manuell zu verstellen. Da das in der Regel aber unterbleibt, stellt der Fahrer die Leitbleche so ein, dass kein Material in den stehenden Bestand geworfen wird. Sollte dies dennoch geschehen, kommt es oft zu Verstopfungen des Mähwerks.

Die DE 41 34 136 C offenbart eine Verteilvorrichtung für Häckselgut, bei der ein Motor zur Verstellung der Leitbleche mittels eines Neigungssensors gesteuert wird. In der EP 0 685 151 A wird vorgeschlagen, die Leitbleche abhängig von der gemessenen Windrichtung und -stärke oder durch Sensoren zu steuern, die die Flugrichtung der ausgeworfenen Häcksel optisch erfassen. In der DE 197 05 843 A wird vorgeschlagen, die Leitbleche anhand der Windrichtung zu steuern. Zusätzlich kann beispielsweise mit einer Videokamera identifiziert oder über eine Eingabeeinrichtung eingegeben werden, auf welcher Seite der Erntemaschine sich der noch nicht abgeerntete Teil befindet. Dadurch soll durch entsprechende automatische oder manuelle Einstellung der Leitbleche die ungewünschte Beaufschlagung des nicht abgeernteten Teils des Feldes vermieden werden.

Bei den im Stand der Technik vorgeschlagenen Einrichtungen zur selbsttätigen Einstellung der Leitbleche sind zusätzliche Messgeräte, wie Windmesser oder Neigungssensoren erforderlich. Zur Erkennung des abgeernteten Teils des Felds wird entweder eine Videokamera benötigt oder es ist eine manuelle Eingabe vorgesehen, die wenig bedienerfreundlich ist.

Die der Erfindung zugrunde liegende Aufgabe wird darin gesehen, eine wenig aufwändige, aber bedienerfreundliche Einrichtung zur Einstellung der Leitelemente bereitzustellen, bei der ein Auswerfen in den noch stehenden Bestand nicht zu befürchten ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, eine Information über die Lage der Seite der Erntemaschine, an der sich der abgeerntete bzw. der noch nicht abgeerntete Teil des Felds befindet, anhand der mittels einer Positionsbestimmungseinrichtung ermittelten aktuellen Position der Erntemaschine und einer Information über das abzuerntende Feld, die in einer Speichereinrichtung abgelegt ist, zu ermitteln und einer Steuerungseinrichtung zuzuführen. Anhand der gewonnenen Information wird durch die Steuerungseinrichtung der Motor zum Verstellen der Leiteinrichtung angesteuert. Die Leiteinrichtung kann derart verstellt werden, dass sie das gehäckselte Gut mehr auf die Seite des bereits abgeernteten Teils als in die Richtung des noch nicht abgeernteten Teils des Felds auswirft. Somit kann die Verteilbreite in jedem Fall auf maximale Schneidwerksbreite eingestellt werden und es ist dennoch gewährleistet, dass kein Häckselgut in den noch stehenden Bestand geblasen wird. Die automatische Verstellung der Leiteinrichtung erfolgt in Abhängigkeit von der Fahrtrichtung relativ zur noch nicht abgeernteten Erntefläche.

Auf diese Weise erreicht man bei der selbsttätigen Einstellung der Leiteinrichtung der Verteilvorrichtung durch einfache Mittel eine selbsttätige Berücksichtigung der Richtung, in der sich der noch nicht abgeerntete Bestand befindet.

Die Verteilvorrichtung kann um eine zusätzliche Windmessung der bekannten Art erweitert werden, wobei das Windsignal zur Übersteuerung bzw. Feineinstellung der von der Seite, auf der sich der noch nicht abgeernteten Bestand befindet, abhängigen Verstellung der Leiteinrichtung genutzt werden kann. Auch die Berücksichtigung eines Neigungssignals ist denkbar.

Bei der Leiteinrichtung kann es sich um an sich bekannte Leitbleche handeln, die einem Strohhäcksler nachgeordnet und an einer Strohverteilerhaube angebracht sind. Andererseits kann die Leiteinrichtung auch ein Schacht sein, der einem Gebläse nachgeordnet ist, wie es beispielsweise in der EP 1 031 273 A oder der EP 0 631 717 A offenbart ist. Der Schacht kann auch einem Häcksler, beispielsweise einem Scheibenradhäcksler, nachgeordnet sein, wie er in der DE 100 63 550 A und der DE 100 63 554 A vorgeschlagen wird. Ein derartiger Schacht kann kontinuierlich um eine etwa vertikale Achse hin- und hergeschwenkt werden, um eine hinreichende Breite abzudecken, die vorzugsweise etwa der Schneidwerksbreite entspricht. Die Erfindung ermöglicht, den Bewegungsbereich des Schachts selbsttätig derart einzustellen, dass er das Häckselgut nur auf die bereits abgeerntete Fläche verteilt.

Bei einigen Erntemaschinen ist ein derartiger, mit einem Schacht zum Auswerfen des gehäckselten Gutes ausgestatteter Häcksler aus der Betriebsposition, in der Stroh ausgeworfen wird, in eine Außerbetriebsposition verbringbar, in der die von der Reinigungseinrichtung ausgeworfene Spreu durch den Häcksler und den Schacht hindurch ausgeworfen wird. Vorzugsweise wird der sich in der Außerbetriebsstellung befindende Schacht durch die Steuerungseinrichtung und den Motor selbsttätig in eine Stellung verbracht, in der die Spreu nicht in die Richtung ausgelassen wird, in der sich der noch stehende Bestand befindet. Diese Ausführungsform ist besonders dann sinnvoll, wenn nur ein einziger Häcksler mit nur einem Schacht vorhanden ist.

In der Speichereinrichtung ist eine Information über das abzuerntende Feld abgelegt. Bei dieser Information kann es sich um eine Information über die Lage des bereits abgeernteten Teils und/oder des noch abzuerntenden Teils handeln, die beim Erntevorgang unter Verwendung der Positionsbestimmungseinrichtung erzeugt wird. Beim Ernten wird anhand des Ausgangssignals des Positionsbestimmungssystems eine Karte erzeugt, die eine Information über die Lage des bereits abgeernteten Bestands enthält. Denkbar ist auch, eine Karte des Felds vorab abzuspeichern und in ihr den abgeernteten bzw. den. noch abzuerntenden Teil zu markieren. Anhand dieser Information und der durch die Positionsbestimmungseinrichtung bestimmten jeweiligen Position der Erntemaschine ist ableitbar, an welcher Seite der Erntemaschine sich die Bestandskante befindet. Die Bestandskante liegt auf der Seite der Erntemaschine, die dem noch nicht abgeernteten Bestand zugewandt ist.

Auch bei bekannter Lage der Feldgrenzen und bekannter Position der Erntemaschine kann bestimmt werden, ob sich die noch nicht abgeerntete Fläche links oder rechts der Erntemaschine befindet. Die abgeerntete Fläche befindet sich zumindest am Anfang des Erntevorgangs auf der Seite der Erntemaschine, die der benachbarten Feldgrenze abgewandt ist, wenn das Feld von außen nach innen abgeerntet wird. Im weiteren Verlauf kann anhand des von der Erntemaschine zurückgelegten Wegs, der mit der Positionsbestimmungseinrichtung erfasst wird, die Lage der Bestandsgrenze relativ zur Erntemaschine evaluiert werden. Auch bei vordefiniertem Weg (beispielsweise mäanderförmig auf dem Feld hin- und herverlaufend), den die Erntemaschine - selbsttätig oder durch einen Bediener gelenkt - zurücklegen soll, kann anhand der Lage der Feldgrenze und der jeweiligen Position der Erntemaschine die Lage des noch nicht abgeernteten Teils des Felds bestimmt werden.

Speziell bei Hochleistungsmähdreschern setzt sich zunehmend die Verwendung von Positionsbestimmungseinrichtungen in Form von Satellitenempfangssystemen durch, die beispielsweise mit dem GPS (Global Positioning System) oder einem anderen Satellitennavigationssystem zusammenwirken, um Ertragskartierungen zu ermöglichen. Mit Hilfe des Satellitenempfangssystems kann die aktuelle Position und die Fahrtrichtung der Erntemaschine bestimmt werden. Denkbar wäre aber auch die Verwendung einer anderen Positionsbestimmungseinrichtung, beispielsweise eines Trägheitsnavigationssystems.

Die Ausgangssignale der Positionsbestimmungseinrichtung können neben der beschriebenen Seitenerkennung zusätzlich außer zur Ertragskartierung auch zur selbsttätigen Lenkung der Erntemaschine dienen, wie in der DE 101 29 135 A und den dort genannten Referenzen beschrieben wird. Anzumerken ist weiterhin, dass die Erfindung nicht nur für Strohhäcksler von Mähdreschern, sondern auch zur selbsttätigen Steuerung des Auswurfturms von Feldhäckslern geeignet ist.

In den Zeichnungen ist ein nachfolgend näher beschriebenes Ausführungsbeispiel der Erfindung dargestellt. Es zeigt:
- Fig. 1: eine Erntemaschine mit einer erfindungsgemäßen Verteilvorrichtung;
- Fig. 2: ein Schema der Steuerungseinrichtung der Verteilvorrichtung; und
- Fig. 3: eine Draufsicht auf ein Feld während eines Erntevorgangs, anhand der die Funktion der Seitenerkennungseinrichtung erläutert wird.

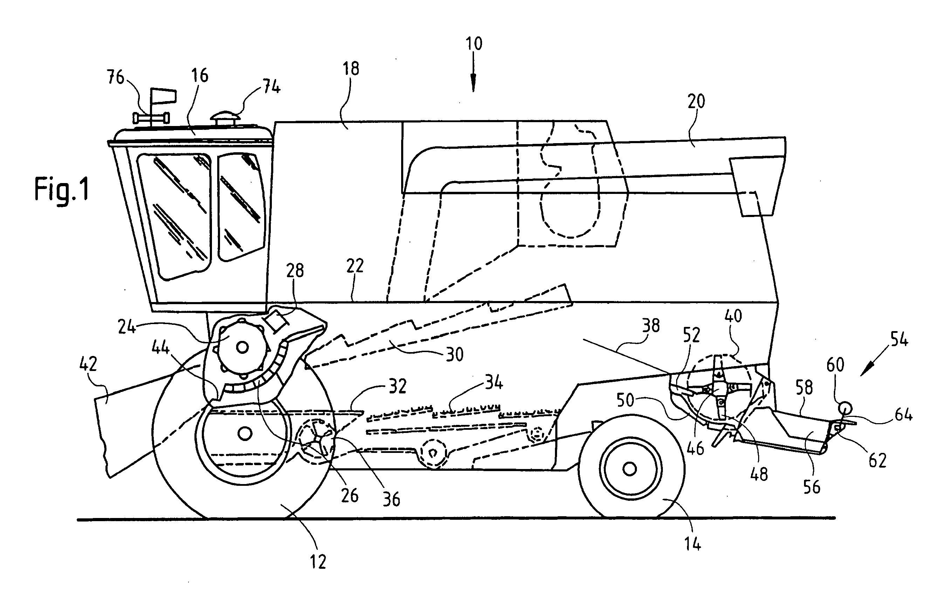

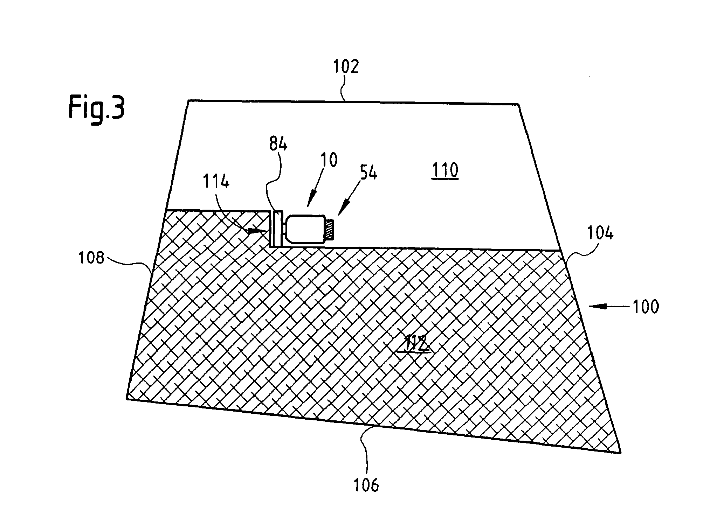

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 und ein Strohleitblech 38 einer Häckseleinrichtung 40 zugeführt werden und leichte Bestandteile mittels eines Gebläses 36 von den Sieben 34 auf den Boden geblasen werden. Auf dem Boden liegendes oder stehendes Gut wird über einen Schrägförderer 42 und eine Steinfangmulde 44 der Dreschtrommel 24 zugeführt, nachdem es von einer in Figur 3 gezeigten Erntegutbergungsvorrichtung 84 vom Boden aufgenommen worden ist.

Die Häckseleinrichtung 40 umfasst einen Rotor 46 mit um seinen Umfang und über seine Länge verteilten, pendelnd aufgehängten Schlegeln 48, der in einem Gehäuse 50 um eine etwa horizontale, quer zur Fahrtrichtung verlaufende Achse rotiert. Im Zusammenwirken mit Gegenmessern 52 werden die ausgedroschenen, großen Erntegutteile zu Häckselgut zerkleinert. An der Rückseite der Häckseleinrichtung 40 ist eine Verteileinrichtung 54 angeordnet, die eine Anzahl seitlich nebeneinander angeordneter Leiteinrichtungen 56 in Form von Strohleitblechen umfasst, welche unterhalb einer Strohverteilerhaube 58 angeordnet sind. Die an ihrem in Fahrtrichtung vorderen Ende um eine vertikale Achse 66 schwenkbar an der Strohverteilerhaube 58 angelenkten Leiteinrichtungen 56 sind in ihrem in Fahrtrichtung weiter hinten liegenden Bereich durch einen Schieber 62 untereinander gekoppelt, der durch eine sich durch einen Schlitz in der Strohverteilerhaube 58 nach oben erstreckende Kopplungsstange 64 mit einem Motor 60 in Form eines doppeltwirkenden Hydraulikzylinders mit einer Kolbenstange 68 verbunden ist. Denkbar wäre auch die Verwendung eines Elektromotors als Motor 60. Auf diese Weise ist der Motor 60 eingerichtet, die rückwärtigen Enden der Leiteinrichtungen 56 quer zur Fahrtrichtung zu verstellen und die Auswurfrichtung der Leiteinrichtungen 56, an denen das Häckselgut vorbeiströmt, vorzugeben.

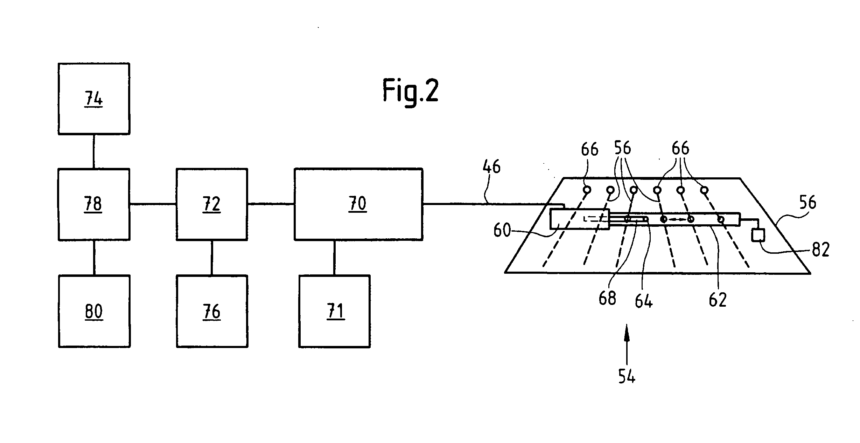

Anhand der Figur 2 ist erkennbar, dass der Motor 60 durch einen Ventilzusammenbau 70 mit einer Quelle 71 unter Druck stehenden Hydraulikfluids verbindbar ist. Der Ventilzusammenbau 70 wird elektromagnetisch durch eine elektronische Steuerungseinrichtung 72 gesteuert. Ein mechanisch mit dem Schieber 62 gekoppelter Sensor 82, der beispielsweise als Schiebepotentiometer realisiert sein kann, ist mit der Steuerungseinrichtung 72 verbunden, um ihr zu Rückkopplungszwecken ein Signal zuzuführen, das eine Information über die Stellung des Schiebers 62 enthält.

Die Steuerungseinrichtung 72 ist mit einem Windsensor 76 verbunden, der ebenfalls auf dem Dach der Fahrerkabine 16 angeordnet ist. Der Windsensor 76 liefert durch eine Windfahne und ein Anemometer eine Information über die jeweils vorhandene Windrichtung und -stärke.

Die Steuerungseinrichtung 72 ist weiterhin mit einer Seitenerkennungseinrichtung 78 verbunden, die zur Identifikation der Seite der Erntemaschine 10 dient, auf der sich ein noch nicht abgeernteter Teil eines Felds befindet. Die Seitenerkennungseinrichtung 78 könnte alternativ zum dargestellten, getrennten Aufbau physikalisch in die Steuerungseinrichtung 72 mit integriert werden. Insbesondere wäre die Verwendung eines oder mehrerer Mikroprozessoren und/oder -controller denkbar, auf dem die Steuerungseinrichtung und die Seitenerkennungseinrichtung realisierende Programme gleichzeitig oder nacheinander ablaufen.

Die Seitenerkennungseinrichtung 78 ist mit einer Positionsbestimmungseinrichtung 74 in Form einer Satellitensignalempfangsantenne verbunden, die sich ebenfalls auf dem Dach der Fahrerkabine 16 befindet. Die Positionsbestimmungseinrichtung 74 empfängt Signale des GPS (Global Positioning Systems), wobei zusätzliche Mittel zum Empfang von Differenzsignalen zur Verbesserung der Genauigkeit vorhanden sein können. Sie liefert Ausgangssignale, die eine Information über die jeweilige Position der Erntemaschine 10 und ihre Fahrtrichtung beinhalten.

Die Seitenerkennungseinrichtung 78 ist auch mit einer Speichereinrichtung 80 verbunden, in der eine Information über das abzuerntende Feld abgelegt ist. Anhand der in der Speichereinrichtung 78 abgelegten Information und der mittels der Positionserfassungseinrichtung 74 ermittelten jeweiligen Position der Erntemaschine 10 stellt die Seitenerkennungseinrichtung 78 der Steuerungseinrichtung 72 eine Information bereit, auf welcher Seite der Erntemaschine 10 sich der noch abzuerntende Bestand befindet. Anhand dieser Information und der Windrichtung und -stärke, die mit dem Windsensor 76 gemessen werden, steuert die Steuerungseinrichtung den Motor 60 über den Ventilzusammenbau 70 derart an, dass eine etwa der Breite der Erntegutbergungsvorrichtung entsprechende Fläche hinter der Erntemaschine 10 mit Häckselgut beaufschlagt wird, wobei die Auswurfrichtung derart bemessen ist, dass der Wind nicht in der Lage ist, das Häckselgut in den noch stehenden Bestand zu blasen. Anhand des Signals der Seitenerkennungseinrichtung 78 wird die Auswurfrichtung hinreichend weit von dem noch stehenden Bestand fort gerichtet.

Im Folgenden wird anhand der Figur 3 die Funktionsweise der Seitenerkennungseinrichtung 78 erläutert. Die Erntemaschine 10 bewegt sich über ein Feld 100, das vier Feldgrenzen 102, 104, 106, 108 aufweist. Der mittels der (in Form eines Schneidwerks realisierten) Erntegutbergungsvorrichtung 84 der Erntemaschine 10 bereits abgeerntete Teil des Felds 100 ist durch das Bezugszeichen 110 gekennzeichnet, der noch nicht abgeerntete Teil durch das Bezugszeichen 112. In der Speichereinrichtung 80 ist eine Information über die Lage der Feldgrenzen 102, 104, 106, 108 abgelegt, aus der eine Karte des Felds 100 generiert wird. Alternativ ist von vornherein eine Karte des Felds 100 in der Speichereinrichtung 80 abgelegt. Die Karte kann auch während eines anfänglichen Umfahrens des Felds 100 zum Abernten des Vorgewendes anhand der Signale der Positionsbestimmungseinrichtung 74 erzeugt werden. Während des Erntevorgangs wird in der Karte der bereits abgeerntete Teil 110 durch Abspeichern entsprechender Informationen markiert, wobei anhand der Signale der Positionsbestimmungseinrichtung 74 evaluiert wird, welcher Teil schon abgeerntet ist. Alternativ wird von einer das Feld 100 repräsentierenden Karte der bereits abgeerntete Teil 110 gelöscht, so dass eine Karte des jeweils noch abzuerntenden Teils 112 verbleibt. Anhand der bekannten jeweiligen Position der Erntemaschine, die mittels der Positionsbestimmungseinrichtung 74 ermittelt wird, der ebenfalls mit der Positionsbestimmungseinrichtung 74 ermittelbaren Fahrtrichtung und der bekannten Lage des abgeernteten Teils 110 des Felds 100 bestimmt die Seitenerkennungseinrichtung 78, ob sich der bereits abgeerntete Teil 110 auf der bezüglich der Fahrtrichtung der Erntemaschine 10 linken oder rechten Seite der Erntemaschine 10 befindet. Anstelle direkt anhand der Signale des Positionsbestimmungssystems 74 (durch einen Vergleich der Position zum jeweiligen Zeitpunkt und der Position, die die Erntemaschine eine bestimmte Zeit, z. B. eine Sekunde, vorher hatte) kann die Fahrtrichtung auch indirekt anhand der Form des noch nicht abgeernteten Felds bestimmt werden. In Figur 3 ist beispielsweise anhand der vor der Erntemaschine 10 liegenden rechteckigen Stufe 114 im noch nicht abgeernteten Teil 112 des Felds 100 vor der Erntegutbergungseinrichtung 84 eindeutig erkennbar, dass die Fahrtrichtung in der in Figur 3 dargestellten Situation von rechts nach links verläuft. Die Leiteinrichtungen 56 der Verteilvorrichtung 54 werden durch den Motor 60, der durch die Steuerungseinrichtung 72 mittels des Ventilzusammenbaus 70 mit Hydraulikfluid beaufschlagt wird, derart positioniert, dass kein Häckselgut in den noch nicht abgeernteten Teil 112 des Felds 100 geworfen wird.

## Patentansprüche

1. Verteilvorrichtung (54) für aus einer Erntemaschine (10) austretendes Häckselgut, mit einer Leiteinrichtung (56) zum Vorgeben der Auswurfrichtung des Häckselguts, einem zum Verstellen der Auswurfrichtung der Leiteinrichtung (56) eingerichteten Motor (60) und einer Steuerungseinrichtung (72), die mit dem Motor (60) sowie einer Seitenerkennungseinrichtung (78) zur Erkennung der Lage eines abgeernteten Teils (110) und/oder noch nicht abgeernteten Teils (112) eines Felds (100) relativ zur Erntemaschine (10) verbunden ist, deren Signale bei der Ansteuerung des Motors (60) berücksichtigt werden, **dadurch gekennzeichnet, dass** die Seitenerkennungseinrichtung (78) mit einer Positionsbestimmungseinrichtung (74) zur Bestimmung der aktuellen Position der Erntemaschine (10) und mit einer Speichereinrichtung (80) verbunden ist, in der eine Information über das abzuerntende Feld (100) abgelegt ist und dass die Seitenerkennungseinrichtung (78) die Lage des abgeernteten Teils (110) und/oder noch nicht abgeernteten Teils (112) des Felds relativ zur Erntemaschine (10) anhand der Position der Erntemaschine und der in der Speichereinrichtung (80) abgelegten Information identifiziert.

2. Verteilvorrichtung (54) nach Anspruch 1, **dadurch gekennzeichnet, dass** die Steuerungseinrichtung (72) den Motor (60) derart steuert, dass das Häckselgut nicht in den noch nicht abgeernteten Teil (112) des Felds (100) ausgeworfen wird.

3. Verteilvorrichtung (54) nach Anspruch 1 oder 2, **dadurch gekennzeichnet, dass** der Steuerungseinrichtung (72) zusätzlich eine Information über die Windrichtung und/oder Windintensität und/oder eine Hangneigung zugeführt wird, und dass die Steuerungseinrichtung (72) den Motor abhängig von dieser Information steuert.

4. Verteilvorrichtung (54) nach einem der vorhergehenden Ansprüche, **dadurch gekennzeichnet, dass** die Leiteinrichtung (56) ein oder mehrere Leitbleche umfasst.

5. Verteilvorrichtung (54) nach einem der vorhergehenden Ansprüche, **dadurch gekennzeichnet, dass** die Leiteinrichtung (54) einen Auswurfschacht umfasst, der vorzugsweise kontinuierlich verschwenkt wird.

6. Verteilervorrichtung (54) nach Anspruch 5, **dadurch gekennzeichnet, dass** die Leiteinrichtung (56) zwischen einer Betriebsposition, in der sie Stroh auswirft und einer Außerbetriebsposition beweglich ist, in der sie Spreu aus einer Reinigungseinrichtung auswirft und dass die Leiteinrichtung (56) auch in der Außerbetriebsposition eine durch den Motor (60) veränderbare Auswurfrichtung aufweist, so dass die Spreu nicht in den noch nicht abgeernteten Teil (112) des Felds (100) ausgeworfen wird.

7. Verteilvorrichtung (54) nach einem der vorhergehenden Ansprüche, **dadurch gekennzeichnet, dass** in der Speichereinrichtung (80) eine anhand der Positionsbestimmungseinrichtung (74) gewonnene Information über die Lage des bereits abgeernteten Teils (110) und/oder des noch nicht abgeernteten Teils (112) des Felds abgelegt ist.

8. Verteilvorrichtung (54) nach einem der vorhergehenden Ansprüche, **dadurch gekennzeichnet, dass** in der Speichereinrichtung (80) eine Information über die Lage der Feldgrenzen (102, 104, 106, 108) abgespeichert ist.

9. Verteilvorrichtung (54) nach einem der vorhergehenden Ansprüche, **dadurch gekennzeichnet, dass** die Seitenerkennungseinrichtung (78) eine Information über die Fahrtrichtung der Erntemaschine (10) aus den Signalen der Positionsbestimmungseinrichtung (74) ableitet und beim Ermitteln der die Lage des abgeernteten Teils (110) und/oder noch nicht abgeernteten Teils (112) des Felds (100) relativ zur Erntemaschine (10) berücksichtigt.

10. Verteilvorrichtung (54) nach einem der vorhergehenden Ansprüche, **dadurch gekennzeichnet, dass** die Positionsbestimmungseinrichtung (74) eine Satellitensignalempfangsantenne umfasst.

11. Erntemaschine (10), insbesondere Mähdrescher, mit einer Verteilvorrichtung (54) nach einem der vorhergehenden Ansprüche.

## Claims

1. A distributing device (54) for chopped material emerging from a harvesting machine (10), with a guide device (56) for determining the direction of ejection of the chopped material, a motor (60) arranged to adjust the direction of ejection of the guide device (56), and a control device (72), which is connected to the motor (60) as well as to a side recognition device (78) for detecting the position of a harvested part (110) and/or an as yet unharvested part (112) of a field (100) relative to the harvesting machine (10), the signals of the side recognition device being taken into account in the control of the motor (60), **characterized in that** the side recognition device (78) is connected to a position determining device (74) for determining the current position of the harvesting machine (10) and to a memory device (80) in which information regarding the field to be harvested (100) is entered, and **in that** the side recognition device (78) identifies the position of the harvested part (110) and/or the as yet unharvested part (112) of the field relative to the harvesting machine (10) on the basis of the position of the harvesting machine and the information entered in the memory device (80).

2. A distributing device (54) according to claim 1, **characterized in that** the control device (72) so controls the motor (60) that the chopped material is not ejected into the as yet unharvested part (112) of the field (100).

3. A distributing device (54) according to claim 1 or 2, **characterized in that** information regarding the wind direction and/or wind strength and/or a side slope is additionally fed to the control device (72) and **in that** the control device (72) controls the motor (60) in dependence on this information.

4. A distributing device (54) according to any of the preceding claims, **characterized in that** the guide device (56) comprises one or more guide plates.

5. A distributing device (54) according to any of the preceding claims, **characterized in that** the guide device (56) comprises an ejection shaft which is preferably continuously swung..

6. A distributing device (54) according to claim 5, **characterized in that** the guide device (56) is movable between an operating position in which it ejects straw and an out of operation position in which it ejects chaff and **in that** the guide device (56) also has an ejection direction variable by the motor (60) in the out of operation position, so that the chaff is not ejected into the as yet unharvested part (112) of the field (100).

7. A distributing device (54) according to any of the preceding claims, **characterized in that** information regarding the position of the already harvested part (110) and/or of the as yet unharvested part (112) of the field derived by means of the position determining device (74) is entered in the memory device (80).

8. A distributing device (54) according to any of the preceding claims, **characterized in that** information regarding the position of the field boundaries (102, 104, 106, 108) is stored in the memory device (80).

9. A distributing device (54) according to any of the preceding claims, **characterized in that** the side recognition device (78) derives information regarding the direction of travel of the harvesting machine (10) from the signals of the position determining device (74), which is taken into account in the determination of the position of the harvested part (110) and/or as yet unharvested part (112) of the field (100) relative to the harvesting machine (10).

10. A distributing device (54) according to any of the preceding claims, **characterized in that** the position determining device (74) comprises a satellite signal receiving antenna.

11. A harvesting machine (10), especially a combine harvester, with a distributing device (54) according to any of the preceding claims.

## Revendications

1. Dispositif de distribution (54) pour des produits hachés sortant d'une machine de récolte (10), comportant un dispositif de guidage (56), destiné à prédéfinir la direction d'éjection des produits hachés, un moteur (60), qui est conçu pour régler la direction d'éjection du dispositif de guidage (56), et un dispositif de commande (72), qui est relié au moteur (60), ainsi qu'à un dispositif de détection des côtés (78), qui est destiné à détecter l'emplacement d'une partie fauchée (110) et/ou d'une partie non encore fauchée (112) d'un champ (100) par rapport à la machine de récolte (10), et dont les signaux sont pris en compte lors de l'activation du moteur (60), **caractérisé en ce que** le dispositif de détection des côtés (78) est relié à un dispositif de détermination de position (74), destiné à déterminer la position actuelle de la machine de récolte (10), et à une unité de mémoire (80), dans laquelle est enregistrée une information sur le champ (100) à faucher, et **en ce que** le dispositif de détection des côtés (78) identifie l'emplacement de la partie fauchée (110) et/ou de la partie non encore fauchée (112) du champ (100) par rapport à la machine de récolte (10) à l'appui de la position de la machine de récolte (10) et de l'information enregistrée dans l'unité de mémoire (80).

2. Dispositif de distribution (54) selon la revendication 1, **caractérisé en ce que** le dispositif de commande (72) commande le moteur (60) de telle sorte que les produits hachés ne sont pas éjectés dans la partie non encore fauchée (112) du champ (100).

3. Dispositif de distribution (54) selon la revendication 1 ou 2, **caractérisé en ce que**, de surcroît, une information sur la direction du vent et/ou l'intensité du vent et/ou l'inclinaison de la pente est acheminée vers le dispositif de commande (72), et **en ce que** le dispositif de commande (72) commande le moteur en fonction de cette information.

4. Dispositif de distribution (54) selon l'une quelconque des revendications précédentes, **caractérisé en ce que** le dispositif de guidage (56) comporte un ou plusieurs déflecteurs.

5. Dispositif de distribution (54) selon l'une quelconque des revendications précédentes, **caractérisé en ce que** le dispositif de guidage (56) comporte une gaine d'éjection qui, de préférence, pivote en continu.

6. Dispositif de distribution (54) selon la revendication 5, **caractérisé en ce que** le dispositif de guidage (56) est mobile entre une position de service, dans laquelle il éjecte la paille, et une position hors service, dans laquelle il éjecte les balles hors d'un dispositif de nettoyage, et **en ce que** le dispositif de guidage (56) possède, également dans la position hors service, une direction d'éjection modifiable par le moteur (60), de telle sorte que les balles ne sont pas éjectées dans la partie non encore fauchée (112) du champ (100).

7. Dispositif de distribution (54) selon l'une quelconque des revendications précédentes, **caractérisé en ce que** dans l'unité de mémoire (80) est enregistrée une information, émanant du dispositif de détermination de position (74) et concernant l'emplacement de la partie déjà fauchée (110) et/ou de la partie non encore fauchée (112) du champ.

8. Dispositif de distribution (54) selon l'une quelconque des revendications précédentes, **caractérisé en ce que** dans l'unité de mémoire (80) est enregistrée une information concernant l'emplacement des limites du champ (102, 104, 106, 108).

9. Dispositif de distribution (54) selon l'une quelconque des revendications précédentes, **caractérisé en ce que** le dispositif de détection des côtés (78), à partir des signaux du dispositif de détermination de position (74), dérive une information sur la direction de déplacement de la machine de récolte (10) et, lors de la détermination de ladite direction de déplacement, tient compte de l'emplacement de la partie fauchée (110) et/ou de la partie non encore fauchée (112) du champ (100) par rapport à la machine de récolte (10).

10. Dispositif de distribution (54) selon l'une quelconque des revendications précédentes, **caractérisé en ce que** le dispositif de détermination de position (74) comporte une antenne de réception de signaux satellite.

11. Machine de récolte (10), en particulier moissonneuse-batteuse, comportant un dispositif de distribution (54) selon l'une quelconque des revendications précédentes.
